(19) Europäisches Patentamt
European Patent Office
Office européen des brevets

(11) Veröffentlichungsnummer: **0 085 823**
**B1**

(12) **EUROPÄISCHE PATENTSCHRIFT**

(45) Veröffentlichungstag der Patentschrift: **05.02.86**

(51) Int. Cl.⁴: **C 09 B 67/22**, C 09 B 29/42 // D06P1/18

(21) Anmeldenummer: **82810567.6**

(22) Anmeldetag: **24.12.82**

(54) **Farbstoffmischung, Verfahren zu ihrer Herstellung und Verwendung zum Färben und Bedrucken von hydrophobem Textilmaterial.**

(30) Priorität: **10.02.82 CH 814/82**

(43) Veröffentlichungstag der Anmeldung: **17.08.83 Patentblatt 83/33**

(45) Bekanntmachung des Hinweises auf die Patenterteilung: **05.02.86 Patentblatt 86/6**

(84) Benannte Vertragsstaaten: **CH DE FR GB IT LI**

(56) Entgegenhaltungen:
**EP-A-0 038 439**
**DE-A-1 966 335**
**DE-A-2 753 235**
**FR-A-2 038 228**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Morawietz, Hans, Dr., Im Egg 38, CH-4147 Aesch (CH)**
Erfinder: **Liechti, Hans Wilhelm, Dr., Brügglistrasse 7, CH-4104 Oberwil (CH)**
Erfinder: **Liechti, Peter, Dr., Alte Olsbergerstrasse 17, CH-4411 Arisdorf (CH)**

**EP 0 085 823 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Aus der DE-A-1966335 sind wasserunlösliche Monoazofarbstoffe bekannt, die z.T. der folgenden Formel I entsprechen, welche gelbe Ausfärbungen auf Polyestermaterialien ergeben. Der Nachteil dieser Farbstoffe ist u.a. der, dass sie auf diesen Materialien ein ungenügendes Aufziehvermögen besitzen. Sie neigen ausserdem beim Färben zu Rekristallisation und Filtrationseffekten, woraus Färbungen mit ungenügendenReibechtheiten resultieren. Die DE-A-2753235 beschreibt verwandte Monoazofarbstoffe, die in der Diazokomponente noch einen zusätzlichen Substituenten enthalten. Auch diese sind mit den vorstehend ge-schilderten Nachteilen behaftet.

Angabe der Erfindung war es daher, Farbstoffe zu entwickeln, die die aufgezeigten Nachteile nicht aufweisen.

Die Lösung bot sich in einer Farbstoffmischung an, die dadurch gekennzeichnet ist, dass sie mindestens drei voneinander verschiedene Farbstoffe der Formel I

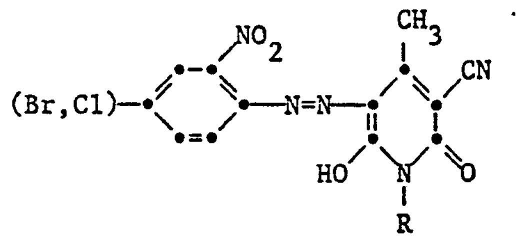

(I)

enthält, worin R einen gegebenenfalls durch einen $C_1$-$C_4$ Alkoxyrest substituierten $C_1$-$C_{16}$-Alkylrest bedeutet, wobei eine aus 3 Farbstoffen bestehende Mischung ausgeschlossen ist, in der in allen drei Einzelfarbstoffen R unsubstituiertes und unverzweigtes $C_3$-$C_7$-Alkyl bedeutet.

Unter "voneinander verschiedenen Farbstoffen der Formel I" werden hier und im folgenden solche verstanden, die sich nur durch den Substituenten R unterscheiden.

Die vorstehende Ausschlussbestimmung bedeutet z.B., dass in einerDreiermischung mindestens ein Farbstoff der Formel (I) vorhanden sein muss, dessen Alkylrest R verzweigt ist oder, wenn er unverzweigt ist, nicht 3-7 Kohlenstoffatome aufweisen darf.

R in der Bedeutung eines $C_1$-$C_{16}$-Alkylrestes stellt einen unverzweigtn Alkylrest dar, oder einen Alkylrest, der vorzugsweise am dem Stickstoffatom benachbarten Kohlenstoffatom unverzweigt, im übrigen aberverzweigt sein kann; es handelt sich beispielsweise um den Methyl-, Aethyl-, n-Propyl-, n-Butyl-, iso-Butyl-, n-Hexyl-, n-und iso-Octyl-, n-und iso-Decyl-und n-und iso-Dodecylrest. Dieser $C_1$-$C_{16}$-Alkyl-rest kann durch einen $C_1$-$C_4$-Alkoxyrest substituiert sein; es handelt sich dann beispielsweise um den 2-Methoxy-äthyl-und 3-iso-Propoxypropylrest. In bevorzugten Farbstoffen bedeutet R einen $C_4$-$C_{14}$- Alkylrest.

Bevorzugte Farbstoffmischungen enthalten drei oder vier voneinanderverschiedene Farbstoffe der Formel I; beispielsweise ist als eine Vierer-Mischung eine solche genannt, die folgende Farbstoffe der For-mel I enhält:

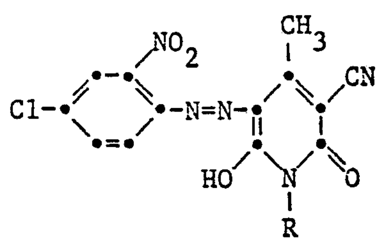

$R = n\text{-}C_3H_7$

$R = n\text{-}C_4H_9$

$R = iso\text{-}C_4H_9$

$R = n\text{-}C_6H_{13}$

In den bevorzugten Farstoffmischungen sind die einzelnen Farbstoffe zu 5 90 Cew.-% und insbesondere zu 20 60 Gew.-% vorhanden; es ist aber auch möglich, dass die einzelnen Farbstoffe in ungefähr glei-chen Anteilen vorliegen; so sind z.B. in einer Dreier-Mischung je ca. 33 % der einzelnen Farbstoffe vorhanden und in einer Vierer Mischung je ca. 25 %, sodass also ein ca. 1:1:1(:1)-Verhältnisder Einzel-Farbstoffe zueinander resultiert.

Die Herstellung dar Farbstoffmischung erfolgt nach bekannten Methoden, beispielsweise derart, dass man

a) eine Diazokomponente der Formel II

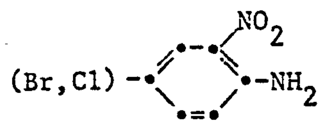

(II)

diazotiert und auf ein Gemisch von mindestens drei voneinander ver-schiedenen Kupplungs-Komponenten der Formel III

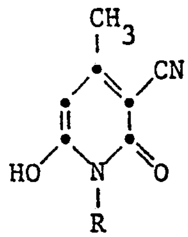

(III)

kuppelt, worin R einen gegebenenfalls durch einen $C_1$-$C_4$-Alkoxyrest substituierten $C_1$-$C_{16}$-Alkylrest bedeutet, wobei in mindestens einer . der drei Kupplungskomponenten R von unsubstituiertem und unverzweigtem $C_3$-$C_7$-Alkyl verschieden ist, oder

b) dass man mindestens drei voneinander verschiedene Farbstoffe der Formel I mischt, wobei die unter Formel (I) angegebene Massgabe bezüglich R gilt.

Was die bevorzugte Herstellungsvariante a) betrifft, so ist das Aminder Formel II und das Pyridon der Formel III bekannt. Beide (Amin und Pyridon) können nach bekannten.Methoden hergestellt werden. Ebenso erfolgen die Diazotierungs-und Kupplungsreaktion nach bekannter Art und Weise, wie z.B. beschrieben in Ullmann's Encyklopädie der technischen Chemie, Bd. 5 (1954) Seite 783ff.

Als Pyridone der Formel III werden beispielsweise eingesetzt:
N-Methyl-3-cyan-4-methyl-6-hydroxy-pyridon-(2),
N-fethyl-3-cyan-4-methyl-6-hydroxy-pyridon-(2),
N-n-Propyl-3-cyan-4-methyl-6-hydroxy-pyridon-(2),
N-n-Butyl-3-cyan-4-methyl-6-hydroxy-pyridon-(2),
N-iso-Butyl-3-cyan-4-methyl-6-hydroxy-pyridon-(2),
N-n-Hexyl-3-cyan-4-methyl-6-hydroxy-pyridon-(2),
N-2-Methoxyäthyl-3-cyan-4-methyl-6-hydroxy-pyridon-(2),
N-3-Propoxypropyl-3-cyan-4-methyl-6:hydroxy-pyridon-(2)
N-n-Octyl-3-cyan-4-methyl-6-hydroxy-pyridon-(2),
N-n-Decyl-3-cyan-4-methyl-6-hydroxy-pyridon-(2),
N-n-Dodecyl-3-cyan-4-methyl-6-hydroxy-pyridon-(2) und
N-n-Hexadecyl-3-cyan-4-methyl-6-hydroxy-pyridon-(2).

Verwendung finden die erfindungsgemässen Farbstoffmischungen zum Fär-ben und Bedrucken von halbsynthetischen und vor allem synthetischen hydrophoben Textilmaterialien oder von Gemischen von Textilmaterialien, die halbsynthetische bzw. synthetische hydrophobe Textilmaterialien enthalten.

Als halbsynthetische Textilmaterialien kommen vor allem Cellulose-2 1/2 Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Aethylenglykol oder Kondensationsprodukten aus Terephthalsäure und 1,4-Bis-(hydroxymethyl)hexahydrobenzol; Polycarbonate, z.B. solchen aus α,α-Dimethyl-4,4'dihydroxy-diphenylmethan und Phosgen, Fasern auf PolyvinylchloridBasis sowie Polyamid-Basis.

Die Applikation der erfindungsgemässen Farbstoffmischungen auf den Textilmaterialien erfolgt nach bekannten Färbeverfahren. Beispielsweise färbt man Polyesterfasermaterialien im Ausziehverfahren auswässriger Dispersion in Gegenwart von üblichen anionischen oder nicht-ionischen Dispergiermitteln und gegebenenfalls üblichen Quellmitteln (Carrier) bei Temperaturen zwischen 80 und 125°C, oder man färbt diese Materialien nach der HT-Methode (Hoch-Temperatur) bei Temperaturen von ca. 130°C. Cellulose-2 1/2-acetat färbt man vorzugsweise zwischen ungefähr 65 bis 85°C und Cellulosetriacetat bei Temperaturen bis zu 115°C.

Die neuen Farbstoffmischungen färben im Falle von Textilgemischen gleichzeitig im Färbebad anwesende Wolle oder Baumwolle nicht oder nur wenig an (sehr gute Reserve) so dass die erfindungsgemässen Farbstoffmischungen auch gut zum Färben von z.B. Polyester/Wolle-und Polyester/Cellulosefaser-Mischgeweben verwendet werden können.

Die erfindungsgemässen Farbstoffmischungen eignen sich ferner auch zum Färben nach den Thermosol-Verfahren.

Das genannte Textilmaterial kann dabei in den verschiedensten Verarbeitungsformen vorliegen wie z.B. als Faser, Faden oder Vlies, als Gewebe oder Gewirke.

Es ist vorteilhaft die erfindungsgemässen Farbstoffmischungen vor ihrer Verwendung in Farbstoffpräparate überzuführen. Hierzu wird die Farbstoffmischung vermahlen, so dass ihre Teilchengrösse im Mittel zwischen 0,01 und 10 Mikron beträgt. Das vermahlen kann in Gegenwart von Dispergiermitteln erfolgen. Als Dispergiermittel kommen solche anionischer oder nichtionischer Natur in Betracht. Als anionische Dispergiermittel seien beispielsweise genannt Kondensationsprodukte von Naphthalin, Formaldehyd und

Schwefelsäure oder Ligninsulfonate. Beispielsweise wird die getrockneteFarbstoffmischung mit einem Dispergiermittel gemahlen oder in Pastenform mit einem Dispergiermittel geknetet und hierauf im Vakuum oderdurch Zerstäuben getrocknet. Mit den so erhaltenen Präparaten kann man, nach Zugabe von Wasser, färben und bedrucken.

Beim Bedrucken wird man die üblichen Verdickungsmittel vervenden, z.B. modifizierte oder nichtmodifizierte natürliche Produkte, beispielsweise Alginate, Britishgummi, Gummi arabicum, Kristallgummi, Johannisbrotkernmehl, Tragant, Carboxymethylcellulose, Hydroxyäthylcellulose, Stärke oder synthetische Produkte beispielsweise Polyacrylamide, Polyacrylsäure oder deren Copolymere oder Poly-vinylalkohole.

Die erfindungsgemässen Farbstoffmischungen haben ein sehr gutes Aufziehvermögen,verbunden mit einem guten Farbstoffaufbau und verleihen den genannten Materialien, vor allem dem Polyestermaterial, gelbe egale Farbtöne von sehr guten Echtheiten, wie guter Licht-echtheit, guter Sublimierechtheit, Thermofixier-, Plissier-, Chlorund Nassechtheit wie Wasser-, Schweiss-und Waschechtheit; die Ausfärbungen sind ferner gekennzeichnet durch eine gute pH-Stabilität, durch hohe Farbbrillanz und hohe Reinheit sowie kein catalytic fading.

Die erfindungsgemässen. Farbstoffmischungen können auch gut verwendet werden zur Herstellung von Mischnuancen zusammen mit anderen Farbstoffen.

Die folgenden Beispiele veranschaulichen die Erfindung ohne sie darauf zu limitieren; Temperaturen sind in Grad Celsius angegeben; Teile (T) bedeuten, sofern nichts anderes angegeben ist, Gewichts-teile.

Beispiel 1: 172,5 g 4-Chlor-2-nitroanilin werden in 750 ml Wasser und 300 ml konz. Salzsäure und 750 g Eis innerhalb von ca. 1 Stunde mit 250 ml 4-n Natriumnitritlösung diazotiert. Nach 2-stündigem Nachrühren bei 4-5° wird die Diazolösung klärfiltriert und nach Zerstörung der überschüssigen salpetrigen Säure mit Sulfaminsäure innerhalb von 30 Minuten in eine Lösung (ca. 0°) von 48 g N-n-Propyl-3-cyan-4-methyl-6-hydroxy-pyridon-(2), 51,5 g N-n-Butyl-3-cyan-4-methyl-6-hydroxy-pyridon-(2) 51,5 g N-iso-Butyl-3-cyan-4-methyl-6-hydroxy-pyridon-(2), und 58,5 g N-nHexyl-3-cyan-4-methyl-6-hydroxy-pyridon-(2) in 3500 ml Wasser und150 ml 30 %iger Natronlauge laufen gelassen. Nach weiteren 45 Minuten Nachrühren bei Raumtemperatur ist die Kupplung beendet. Manstellt den pH-Wert auf 6 und rührt die gelbe Suspension während 2 Stunden bei ca. 80 bis 85° dann wird heiss filtriert, gewaschen und getrocknet. Man erhält folgende Farbstoffmischung:

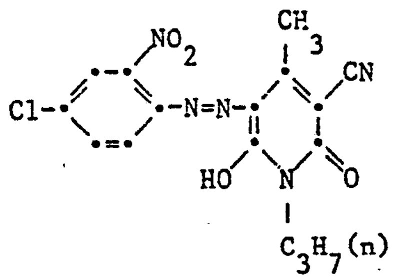

ca. 25 T

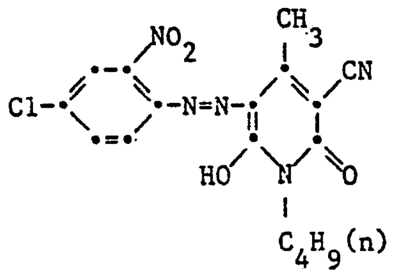

ca. 25 T

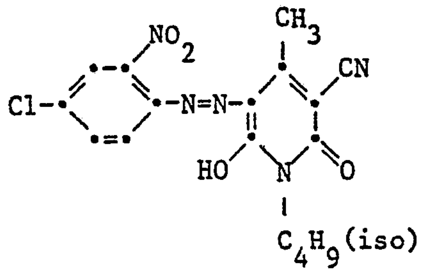

ca. 25 T

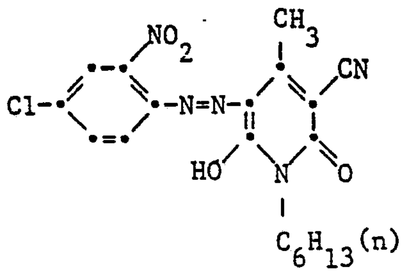

ca. 25 T

Diese Farbstoffmischung kann auch durch Mischen der separat herge-stellten Einzelfarbstoffe erhalten werden.

Verfährt man gemäss den Angaben des Beispiels 1 verwendet aber als Kupplungskomponenten die in folgender Tabelle, Kol. II genannten Kupplungskomponenten in den in Kol. III angegebenen Teilen, so er-hält man die in Kol. IV angegebenen Farbstoffmischungen die auf Polyestermaterial ausgefärbt gelbe Färbungen ergeben.

Die in dieser Tabelle angegebenen Symbole A,B,C,D,E,F und G haben dabei folgende Bedeutung

A = $-C_2H_5$

B = $-(CH_2)_3CH_3$

C = $-CH_2-CH(C_2H_5)-(CH_2)_3CH_3$

D = $-(CH_2)_7-CH_3$

E = $-(CH_2)_9-CH_3$

F = $-(CH_2)_{11}-CH_3$

G = $-(CH_2)_{15}-CH_3$

Tabelle

| I | II | III | IV |
|---|---|---|---|
| Bsp. | 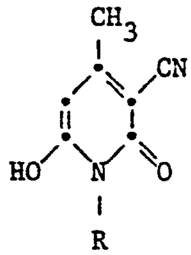 R = | Teile | Farbstoffmischung 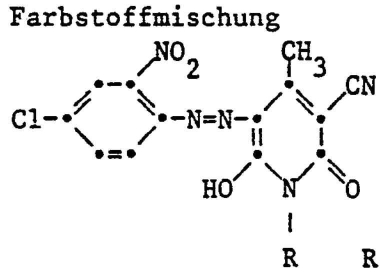 R = |
| 2 | B, C, D | 1:1:1 | B, C, D |
| 3 | B, C, F | 1:1:1 | B, C, F |
| 4 | B, C, D, E | 1:1:1:1 | B, C, D, E |
| 5 | C, D, E, F | 1:1:1:1 | C, D, E, F |
| 6 | A, B, C, D | 1:2:2:2 | A, B, C, D |
| 7 | B, C, F | 2:2:1 | B, C, F |
| 8 | C, F, G | 3:3:1 | C, F, G |

Beispiel 9: 1 T des gemäss Beispiel 1 erhaltenen Farbstoffgemisches werden mit 2 T einer 50%-igen wässerigen Lösung des Natriumsalzes der Dinaphthylmethandisulfonsäure nass vermahlen und getrocknet.

0,012 T dieses Farbstoffpräparates werden mit 0,1 T Oleylmethyltaurid-Natriumsalz, 0,1 T Dinaphthylmethandisulfonsäure-Natriumsalz und 0,5 T Ammonsulfat verrührt. Durch Verdünnen mit Wasser wird daraus ein Färbebad von 200 T bereitet und dessen pH Wert mit 85%-iger wässeriger Ameisensäure auf 5 gestellt. In dieses Bad geht man bei 50' mit 10 T eines Diolen-Gewebes (Polyester) ein, steigert die Temperatur innert 30 Minuten in geschlossenem Gefäss auf 120° und dann innerhalb weiteren 10 Minuten auf 130°. Anschliessend wird gut gespült. Man erhält eine kräftige gelbe Färbung wobei die Farbstoff-mischung sehr gut aus dem Färbebad ausgezogen ist. Diese Färbung ist stabil und zeigt kein catalytic-fading.

Verwendet man anstelle des beschriebenen Farbstoffgemisches 0,012 T einer der Einzelkomponenten davon und verfährt sonst gleich, so erhält man nur eine schwache gelbe Färbung. Um eine vergleichbare kräftige gelbe Färbung zu erhalten, muss das Textilgut weitere 30 bis 60 Minuten bei 130° weitergefärbt werden.

**Patentansprüche:**

1. Farbstoffmischung, dadurch gekennzeichnet, dass sie mindestens drei voneinander verschiedene, sich nur im Substituenten R unterscheidende Farbstoffe der Formel I

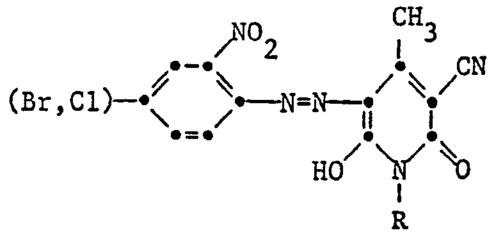

(I)

enhält,worin einen gegegenenfalls durch einen $C_1$-$C_4$-Alkoxyrestsubstituierten $C_1$-$C_{16}$-Alkylrest bedeutet, wobei eine aus 3 Farbstoffen bestehende Mischung ausgeschlossen ist, in der in allen dreiEinzelfarbstoffen R unsubstituiertes und unverzweigtes $C_3$-$C_7$-Alkyl bedeutet.

2. Farbstoffmischung nach Anspruch 1, dadurch gekennzeichnet, dass diese drei oder vier voneinander verschiedene Farbstoffe der Formel I gemäss Anspruch 1 enthält.

3. Farbstoffmischung gemäss den Ansprüchen 1 und 2, dadurch gekenn-zeichnet, dass die Einzel-Farbstoffe in der Farbstoffmischung zu je 5 90 Gew.-% vorliegen.

4. Farbstoffmischung gemäss Anspruch 3, dadurch gekennzeichnet, dass die Einzelfarbstoffe in der Farbstoffmischung zu je 20 60 Gew.-% vorliegen.

5. Farbstoffmischung gemäss Anspruch 3, dadurch gekennzeichnet, dass die Einzelfarbstoffe in der Farbstoffmischung zu je gleichen Anteilen vorliegen.

6. Verfahren zur Herstellung einer Farbstoffmischung gemäss den Ansprüchen 1 bis 5, dadurch gekennzeichnet, dass man: a) eine Diazokomponente der Formel II

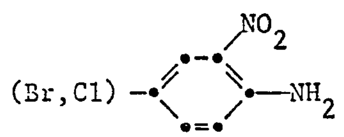

(II)

diazotiert und auf ein Gemisch von mindestens drei voneinander ver-schiedenen Kupplungskomponenten der Formel III

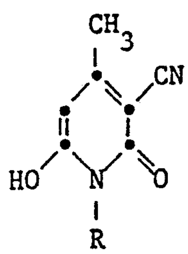

(III) ,

kuppelt, worin R einen gegebenenfalls durch einen $C_1$-$C_4$-Alkoxyrest substituierten $C_1$-$C_{16}$-Alkylrest bedeutet, wobei in mindestens einer der drei Kupplungskomponenten R von unsubstituierteü und unver-zweigtem $C_3$-$C_7$-Alkyl verschieden ist, oder

b) dass man mindestens drei voneinander verschiedene Farbstoffe der Formel I gemäss Anspruch 1 mischt, wobei die in Anspruch 1 angegebene Massgabe bezüglich R gilt.

7. Verwendung der Farbstoffmischung gemäss den Ansprüchen 1 bis 5 bzw.der nach dem Verfahren von Anspruch 6 erhaltenen Farbstoffmischung zum Färben und Bedrucken von halbsynthetischem, synthetischem, hydrophobem Fasermaterial oder Gemischen von Fasermaterialien die synthe-tisches hydrophobes Fasermaterial enthalten.

8. Verwendung der Farbstoffmischung gemäss Anspruch 7 zum Färben und Bedrucken von Polyestermaterialien.

**Claims**

1. A dye mixture which contains at least three different dyes of formula I, the difference lying only in the meaning of the substituent R,

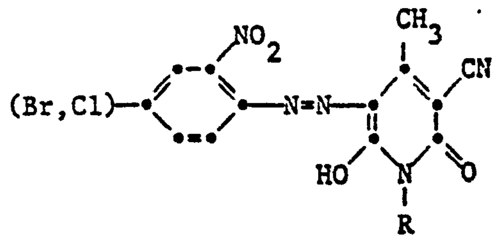

(I)

in which R is a $C_1$-$C_{16}$alkyl radical which is unsubstituted or substituted by a $C_1$-$C_4$alkoxy radical, with the exception of a mixture comprising three dyes, in which mixture R in all three individual dyes is unsubstituted and unbranched $C_3$-$C_7$alkyl.

2. A dye mixture according to claim 1, which contains three or four different dyes of the formula I according to claim 1.

A dye mixture according to either of claims 1 or 2, which contains each of the individual dyes in an amount of 5-90 % by weight.

4. A dye mixture according to claim 3, which contains each of the individual dyes in an amount of 20-60 % by weight.

5. A dye mixture according to claim 3, which contains the individual dyes in equal proportions.

6. A process for the preparation of a dye mixture according to any one of claims 1 to 5, which comprises:

a) diazotizing a diazo component of the formula II

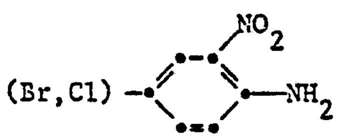

(II)

and coupling the diazotized product to a mixture of at least three different coupling components of the formula III

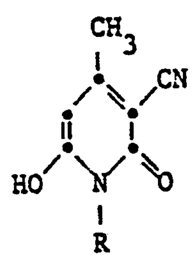

(III)

in which R is a $C_1$-$C_{16}$alkyl radical which is unsubstituted or substituted by a $C_1$-$C_4$alkoxy radical, or

b) mixing at least three different dyes of the formula I according to claim 1, with the proviso concerning R stated in claim 1 being applicable.

7. Use of a dye mixture according to any one of claims 1 to 5 or of a dye mixture obtained according to the process of claim 6 for dyeing or printing regenerated, synthetic, hydrophobic fiber material or mixtures of fiber materials which contain synthetic hydrophobic fiber material.

8. Use of a dye mixture according to claim 7 for dyeing or printing polyester materials.

**Revendications**

1. Mélange tinctorial, caractésé par le fait qu'il contient au moins trois colorants differénts les uns des autres, ne différant que par le substituant R, de formule I

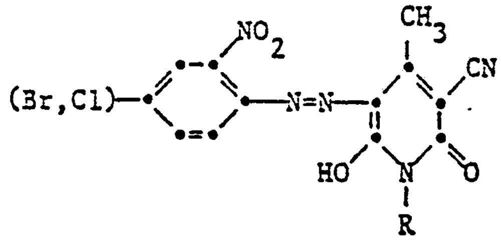

(I)

dans laquelle R représente un reste alkyle en $C_1$-$C_{16}$ éventuellemnt substitué par un groupe alcoxy en $C_1$-$C_4$, étant exclu un mélange consti-tué de trois colorants dans lequel R représente, dans chacun des trois colorants individuels, un reste alkyle en $C_3$-$C_7$ non substitué et non ramifié.

2. Mélange tinctorial selon la revendication 1, caractérisé par le fait qu'il contient trois ou quatre colorants de formule I selon la revendication 1 qui différent les uns des autres-.

3. Mélange tinctorial selon les revendications 1 et 2, carac-térisé par le fait que les colorants individuels représentent chacun 5 90% en poids du mélange tinctorial.

4. Mélange tinctorial selon la revendication 3, caractérisé par le fait que les colorants individuels représentent chacun 20 60% en poids du mélange tinctorial.

5. Mélange tinctorial selon la revendication 3, caractérisé par le fait que les colorants individuels se trouvent dans le mélange tinctorial chacun dans les mêmes proportions.

6. Procédé pour la préparation d'un mélange tinctorial selon les revendications 1 à 5, caractérisé par le fait que l'on a) diazote un composant diazoique de formule II

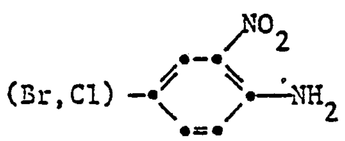

(II)

et qu'on le copule sur un mélange d'au moins trois composants de copula-tion, différents les uns des autres, de formule III

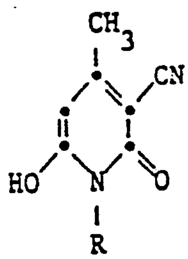

(III)

dans laquelle R représente un reste alkyle en $C_1$-$C_{16}$ éventuellement substitué par un groupe alcoxy en $C_1$-$C_4$, R étant, dans au moins un des trois composants de copulation, différent d'un reste alkyle en $C_3$-$C_7$ non substitué et non ramifié, ou b) mélange au moins trois colorants de formule I différents les uns des autres, selon la revendication 1, la condition pour R donnée dans la revendication 1 étant valable.

7. Utilisation du mélange tinctorial selon les revendications 1 à 5, ou du mélange tinctorial obtenu suivant le procédé de la revendi-cation 6, pour la teinture et l'impression de matériau fibreux hydrophobe semi-synthétique, synthétique, ou de mélanges de matériaux fibreux qui contiennent un matériau fibreux hydrophobe synthétique.

8. Utilisation du mélange tinctorial selon la revendication 7, pour la teinture et l'impression de matériaux en polyester.